## Europäisches Patentamt
## European Patent Office
## Office européen des brevets

(11) Veröffentlichungsnummer: **0 139 986**
**B1**

(12) # EUROPÄISCHE PATENTSCHRIFT

(45) Veröffentlichungstag der Patentschrift:
**16.12.87**

(51) Int. Cl.⁴: **C 08 L 27/06** //
**(C08L27/06, 61:10, 97:02)**

(21) Anmeldenummer: **84110022.5**

(22) Anmeldetag: **22.08.84**

(54) Polyvinylchlorid-Zusammensetzung.

(30) Priorität: **25.08.83 BG 62196/83**

(43) Veröffentlichungstag der Anmeldung:
**08.05.85 Patentblatt 85/19**

(45) Bekanntmachung des Hinweises auf die Patenterteilung:
**16.12.87 Patentblatt 87/51**

(84) Benannte Vertragsstaaten:
**DE FR GB IT SE**

(56) Entgegenhaltungen:
GB-A-1 064 683

**PLASTE UND KAUTSCHUK, Band 29, Heft 5, 1982, Seiten 277-278, Leipzig, DD; M. NATOW u.a.: "Füllung von Polyvinylchlorid mit Holzmehl" Encyclopedia of Polymer Science and Technology, 1980, Vol. 10, Seite 57**

**Die Akte enthält technische Angaben, die nach dem Eingang der Anmeldung eingereicht wurden und die nicht in dieser Patentschrift enthalten sind.**

(73) Patentinhaber: **VISH CHIMIKO-TECHNOLOGITCHESKI INSTITUT, 8 Boul. Kl. Ohridski, Sofia (BG)**

(72) Erfinder: **Natov, Miltcho Angelov, Prof., Quartal Simeonovo Kisseliza Strasse 11, Sofia (BG)**
Erfinder: **Vassileva, Stefanka Vassileva, Komplex Mladost Block 14- 2, Sofia (BG)**
Erfinder: **Kotchev, Hristo Borissov, Dipl.- Ing., Shipka Strasse 5, Pleven (BG)**
Erfinder: **Djagarov, Zvetan Stefanov, Dipl.- Ing., Komplex Storgosia, Pleven (BG)**
Erfinder: **Popov, Nikola Nikolov, Grenaderska-Strasse 84, Bl. Sadrushie Pleven (BG)**

(74) Vertreter: **von Füner, Alexander, Dr., Patentanwälte v. Füner, Ebbinghaus, Finck Mariahilfplatz 2 & 3, D-8000 München 90 (DE)**

EP 0 139 986 B1

**Beschreibung**

Die Erfindung betrifft eine Polyvinylchlorid-Zusammensetzung zur Herstellung unterschiedlicher Erzeugnisse, insbesondere von Bau- und Möbelplatten und Profilen.

Aus Anenkov v. F., Drevesnje Polymernije Materiali i Technologii ich Polytschenija, Moskau, 1974 und Hrulev M. V., Polyvinylchlorid, Isdanie "Technika", C., 1977 sind Zusammensetzungen bekannt, die in der Möbelindustrie und im Bauwesen benutzt werden, von denen diejenigen bei denen Holz als Füllstoff benutzt wird, von größtem Interesse sind.

Aus der BG-PS 29 944 ist eine Polyvinylchlorid-Zusammensetzung bekannt, welche einen Stabilisator, einen Weichmacher, einen Gleitmittel, Pigment und ein mit einer wäßrigen Lösung des Resol-Phenolformaldehyd-Harzes vorbehandeltes Holzmehl enthält. Die Vorbehandlung besteht in einer Zerkleinerung, einer Trocknung des Holzmehls und Imprägnierung mit einer wäßrigen Lösung des Resol-Phenolformaldehyd-Harzes und anschließend einer erneuten Trocknung bei 120°C.

Ein Nachteil der bekannten Zusammensetzung besteht darin, daß der Holz-Füllstoff mit wässriger Harz-Lösung imprägniert wird, was eine erneute Trocknung erfordert. Bei unvollständiger Trocknung des Füllstoffs treten in den fertigen Erzeugnissen Defekte wegen der Gasausscheidung während der Verarbeitung der Zusammensetzung auf, was zu einer Verminderung der physikalisch-mechanischen Kennwerte der Erzeugnisse führt.

Aufgabe der Erfindung ist es nun, eine Polyvinylchlorid-Zusammensetzung anzugeben, bei der die Gasausscheidung vermindert ist, und die sowohl eine bessere äußere Gestaltung und Aussehen und erhöhte physikalisch-mechanische Kennwerte aufweist, ohne daß eine erneute Trocknung des Füllstoffs erforderlich ist.

Diese Aufgabe wird durch die erfindungsgemäße Polyvinylchloridzusammensetzung, enthaltend Stabilisatoren, Weichmacher, Gleitmittel, Füllstoffe und Holzmehl, gelöst, und zwar dadurch, daß sie zusätzlich gehärtetes und nichtgehärtetes Novolak-Phenolformaldehyd-Harz enthält, wobei die Komponenten folgende Gewichtsverhältnisse aufweisen: 100 Gew.-Teile Polyvinylchlorid, 1 bis 12 Gew.-Teile Stabilisatoren, 1 bis 75 Gew.-Teile Weichmacher, 1 bis 5 Gew.-Teile Gleitmittel, 1 bis 15 Gew.-Teile Calciumcarbonat, 5 bis 95 Gew.-Teile Holzmehl mit Teilchengrößen von 5 bis 1000 µm, vorzugsweise von 10 bis 100 µm, 0,05 bis 25 Gewichtsteile Novolak-Phenolformaldehyd-Harz, gegebenenfalls bis zu 6 Gewichtsteile Formalin und bis zu 5 Gewichtsteile Metalloxid oder -hydroxid.

Als Stabilisatoren können beispielsweise Bleistabilisatoren eingesetzt werden, wie zweibasisches Bleiphosphit, Bleistearat und Bleisulfit in einem Verhältnis von 3:0 und 6:1, oder Calciumstabilisatoren wie Calciumstearat, Calciumcarbonat, epoxydierte pflanzliche Öle oder eine Kombination der oben erwähnten Stabilisatoren. Als Gleitmittel kann z. B. eine Kombination von 0,5 bis 3 Gew.-Teilen Stearin, 0,5 bis 1,2 Gew.-Teilen Alkylester von Dicarbonsäuren und 1 bis 2 Gew.-Teilen Wachsen und Paraffinen eingearbeitet werden. Weiterhin können 0,5 bis 5 Gew.-Teilen Farbstoff und mattierenden Zusätzen, beispielsweise 0,25 bis 3 Gew.-Teilen Titandioxid eingearbeitet werden. Als Weichmacher kann Dioctylphtalat, eingesetzt werden. Die Teilchengröße des Holzmehls beträgt, wie oben erwähnt, 5 bis 1000 µm, z. B. auch 100 bis 500 µm, jedoch vorzugsweise 10 bis 100 µm. Als zusätzliches Metalloxid bzw. -hydroxid können Calciumoxid, Calciumhydroxid oder Magnesiumoxid eingesetzt werden.

Bei der Herstellung und Verarbeitung der Zusammensetzung werden herkömmliche Technologien und Einrichtungen benutzt: Vermischen der Komponenten in einem zweistufigen Innenmischer und Extrusion der Zusammensetzung zu einem Blattmaterial, Profil, Rohr oder einem anderen Erzeugnis.

Die Vorteile der erfindungsgemäßen Polyvinylchlorid-Zusammensetzung bestehen in folgendem: das Material ist wasserdicht und feuchtigkeitsbeständig, es kann dank der niedrigen Viskosität der Schmelze ohne technologische Schwierigkeiten verarbeitet werden. Es weist ein sehr gutes holzähnliches Aussehen ohne Defekte auf, es kann genagelt und mit den in der Möbelindustrie üblichen Klebstoffen geklebt werden, es kann formgestanzt werden und kann durchgefärbt oder oberflächlich gefärbt und lackiert werden. Es weist hohe Festigkeitswerte auf.

Anhand der in der Tabelle 1 und Tabelle 2 zusammengefaßten Beispiele wird die Erfindung näher erläutert.

**0 139 986**

**Tabelle 1**
Bestandteile der Zusammensetzung

| Nr. | Bestandteile | Beispiel | | | | |
|---|---|---|---|---|---|---|
| | Gewichtsteile | 1* | 2 | 3 | 4 | 5 |
| 1 | 2 | 3 | 4 | 5 | 6 | 7 |
| 1. | PVC-suspensionsartig | 100,0 | 100,0 | 100,0 | 100,0 | 100,0 |
| 2. | Holzmehl | 28,5 | 28,5 | 28,5 | 80,0 | 80,0 |
| 3. | Stabilisatoren | | | | | |
| | -zweibasiges | | | | | |
| | -Bleiphosphit | | 3,0 | 3,0 | 3,0 | 3,0 |
| | -Bleistearat | | 0,6 | 0,6 | 0,6 | 0,6 |
| | -Bleisulfit | 1,5 | 1,0 | 1,0 | 1,0 | 1,0 |
| | -Calciumstearat | | 2,0 | 2,0 | 2,0 | 2,0 |
| | -epoxydiertes Sojaöl | - | 5,0 | 5,0 | 5,0 | 5,0 |
| 4. | Weichmacher | | | | | |
| | -Dibutylphthalat | 10,0 | - | - | - | - |
| | -Diisooctyl-phthalat | - | 8,0 | 8,0 | 8,0 | 8,0 |
| 5. | Gleitmittel | | | | | |
| | -Montanwachs | 1,0 | - | - | - | - |
| | Ester einer Dicarbonsäure mit aliphatischen Alkoholen | - | 1,2 | 1,2 | 8,0 | 0,8 |
| | -Innengleitmittel | - | 0,6 | 0,6 | - | - |
| | -Stearin | - | 2,0 | 2,0 | - | - |
| 6. | Titandioxid | - | 0,5 | 0,5 | 0,5 | 0,5 |
| 7. | Chloriertes Polyäthylen | - | - | - | - | - |
| 8. | Phenolformaldehydarz | | | | | |
| | -Resolharz (40%ige wässrige Lösung) in Gewichtsteilen | | | | | |
| | Trockensubstanz | 7,1 | - | - | - | - |
| | Novolak-Harz | - | 2,850 | 2,850 | 8,0 | 8,0 |
| 9. | 37%iges Formalin | - | - | 0,3 | - | 0,8 |
| 10. | Calciumhydroxid | - | - | 0,150 | - | 0,4 |
| 11. | Calciumcarbonat | - | 5,0 | 5,0 | 5,0 | 5,0 |

* gemäß BG-PS 29 944

Herstellungstechnologie: in einem zweistufigen Innenmischer werden bei einer Temperatur von 150° C während 20 Minuten das Holzmehl mit dem Novolak-Phenolformaldehydharz, gegebenenfalls mit Calciumoxid und Formalin gemischt. In einem zweistufigen Innenmischer werden bei einer Temperatur von 120° C während 10 Minuten das Polyvinylchlorid mit den restlichen Komponenten des trockenen Polyvinylchlorid-Gemisches (gemäß Tabelle 1), einschließlich des aktivierten Holzmehls vermischt. Das trockene Gemisch wird zu Blattmaterial bei einer Temperatur der einzelnen Zylinderzonen von 165° C bis 185° C und bei einer Temperatur der einzelnen Zonen des Profilkopfes von 165° C bis zu 180° C extrudiert. Das erhaltene Blattmaterial hat die in der Tabelle 2 zusammengefaßten physikalisch-mechanischen Kennwerte.

3

**Tabelle 2**
Physikalisch-mechanische Kennwerte

| Kennwert | | Beispiel | | | | |
|---|---|---|---|---|---|---|
| | | 1* | 2 | 3 | 4 | 5 |
| 1. | Zugfestigkeit (MPa) | 32,0 | 37,7 | 39,5 | 24,5 | 24,5 |
| 2. | Stoßfestigkeit (kJ/m²) | 2,9 | 3,2 | 3,5 | 2,2 | 2,7 |
| 3. | Statische Biegefestigkeit (MPa) | 4,2 | 4,3 | 5,2 | 3,7 | 3,75 |
| 4. | Biegewinkel | 10° | 21° | 18° | 16°20' | 16°40' |
| 5. | Wasserabsorption nach 24 Stunden(%) | <1 | <0,5 | <0,3 | <1 | <1 |
| 6. | Relative Reißdehnung % | <1,5 | <14 | <13 | <12 | <10 |
| 7. | Leistungsaufnahme des Elektromotors bei der Extrusion (kW) | 41 | 38 | 38 | 41 | 41 |

## Patentansprüche

Polyvinylchlorid-Zusammensetzung, enthaltend Stabilisatoren, Weichmacher, Gleitmittel, Füllstoffe und Holzmehl, <u>dadurch gekennzeichnet</u> , daß sie zusätzlich gehärtetes und nichtgehärtetes Novolak-Phenolformaldehyd-Harz enthält, wobei die Komponenten folgende Gewichtsverhältnisse aufweisen: 100 Gewichtsteile Polyvinylchlorid, 1 bis 12 Gewichtsteile Stabilisatoren, 1 bis 75 Gewichtsteile Weichmacher, 1 bis 5 Gewichtsteile Gleitmittel, 1 bis 15 Gewichtsteile Calciumcarbonat, 5 bis 95 Gewichtsteile Holzmehl mit Teilchengrößen von 5 bis 1000 µm, vorzugsweise von 10 bis 100 µm, 0,05 bis 25 Gewichtsteile Novolak-Phenolformaldehyd-Harz, gegebenenfalls bis zu 6 Gewichtsteile Formalin und bis zu 5 Gewichtsteile Metalloxid oder -hydroxid.

## Claim

Polyvinylchloride composition containing stabilisers, plasticisers, lubricants, fillers and wood flour, characterised in that it additionally contains cured and uncured phenolformaldehyde novalac resin, with the components possessing the following weight relationships: 100 parts by weight of polyvinyl chloride, 1 to 12 parts by weight of stabilisers, 1 to 75 parts by weight of plasticisers, 1 to 5 parts by weight of lubricants, 1 to 15 parts by weight of calcium carbonate, 5 to 95 parts by weight of wood flour with particle sizes of 5 to 1000 µm, preferably 10 to 100 µm, 0.05 to 25 parts by weight of phenolformaldehyde novalac resin, optionally up to 6 parts by weight of formalin and up to 5 parts by weight of metal oxide or hydroxide.

## Revendication

Composition de poly (chlorure de vinyle), renfermant des stabilisateurs, des plastifiants, des lubrifiants, des charges et de la farine de bois, caractérisée par le fait qu'elle renferme en outre de la résine phénolformaldéhyde de type Novolaque durcie et non durcie, les composants étant présents dans les rapports en poids suivants:
- 100 parties en poids de poly(chlorure de vinyle);
- 1 à 12 parties en poids de stabilisateurs;
- 1 à 75 parties en poids de plastifiants;
- 1 à 5 parties en poids de lubrifiants;
- 1 à 15 parties en poids de carbonate de calcium;
- 5 à 95 parties en poids de farine de bois présentant des dimensions de particules allant de 5 à 1000 µm, de préférence, de 10 à 100 µm;
- 0,05 à 25 parties en poids de résine phénolformaldéhyde de type Novolaque,

- éventuellement, jusqu'à 6 parties en poids de formol et jusqu'à 5 parties en poids d'oxyde ou hydroxyde métallique.